# EUROPÄISCHE PATENTSCHRIFT

(11) **EP 2 940 488 B1**
(45) Veröffentlichungstag und Bekanntmachung des Hinweises auf die Patenterteilung: **18.05.2016**
(21) Anmeldenummer: 14166713.9
(22) Anmeldetag: 30.04.2014
(51) Int. Cl.: G01S 17/02

(54) **Vorrichtung und Verfahren zum optischen Erfassen eines Objektes**
Device and method for optically detecting an object
Appareil et procédé pour la détection par moyen optique d'un objet

(43) Veröffentlichungstag der Anmeldung: 04.11.2015
(73) Patentinhaber: SICK AG, 79183 Waldkirch (DE)
(72) Erfinder: Tritschler, Markus, 79189 Bad Krozingen (DE)
(74) Vertreter: Ludewigt, Christoph

(56) Entgegenhaltungen:
- EP-A1- 1 655 622
- EP-A2- 1 837 586
- EP-B1- 2 085 841
- DE-A1- 10 308 148

## Beschreibung

Die vorliegende Erfindung betrifft einen Sensor gemäß Anspruch 1 sowie ein Verfahren zum Betreiben des Sensors.

Vorrichtungen und Verfahren, bei denen ein auf einer Fördereinrichtung befindliches Objekt entlang einer Bearbeitungsstrecke geführt wird, das an einer bestimmten Position erfasst und bei einer anderen Position bearbeitet wird, werden hier als Bearbeitungseinrichtungen oder als Durchlaufmaschinen bezeichnet. Hierbei werden Werkstücke, hier als Objekte bezeichnet, wie zum Beispiel Plattenmaterial wie Vollholz- bzw. Spanplatten, sogenannte Tischlerplatten, Sperrholzplatten, Verbundplatten aus Holz, Kunststoff oder Metall oder dergleichen auf einer Fördereinrichtung erfasst und daraufhin wird eine Bearbeitung, z. B. Schneiden, Fräsen, Bohren an denselben durchgeführt.

Dazu sind an geeigneten Positionen an der Fördereinrichtung binäre Sensoren angeordnet, die detektieren, ob ein Objekt vorhanden ist oder nicht. Mittels Encodern kann weiterhin die Geschwindigkeit der Fördereinrichtung bestimmt und damit eine Position des Objektes berechnet werden. Dies geschieht in einer Steuereinheit, die daraufhin einem nachgeschalteten Aktor befehlen kann, einen Bearbeitungsschritt auszuführen.

Hierbei ist es einerseits äußerst wichtig, dass die Position des Werkstücks auf der Fördereinrichtung immer genau bekannt ist, so dass eine darauf folgende Bearbeitung auch an der richtigen Stelle des Werkstücks ausgeführt wird. Andererseits ist es wünschenswert, so schnell wie möglich die korrekte Position eines Objektes zu wissen, wenn das Objekt an dem Ort der Bearbeitung ankommt, denn dann kann der Bearbeitungsschritt sofort erfolgen. Heutzutage laufen die Bearbeitungsmaschinen so schnell, dass Zeitgewinne von Bruchteilen von Sekunden pro Objekt über den Tag summiert einen erheblichen Gesamtzeitgewinn bedeuten. Bei derart schnell laufenden Maschinen ergibt sich das weitere Problem, dass Störeinflüsse, wie Schlupf und Toleranzen, auf die Position des Werkstücks gravierender werden und nur dann die Geschwindigkeit erhöht werden kann, wenn die Präzision steigt.

Aus der EP 2 085 841 B1 ist ein gattungsgemäßer Sensor für den genannten Einsatzzweck offenbart.

Aus der EP 1 655 622 A1 ist ein Sensor bekannt, der anhand von Schwellwerten ein Erkennungssignal bestimmt und dieses verzögert um eine bestimmbare Zeitspanne ausgibt.

Somit ist es eine Aufgabe der vorliegenden Erfindung, den gattungsgemäßen Sensor derart weiterzubilden, dass eine weitere Steigerung der Präzision und ein weiterer Zeitgewinn möglich ist.

Diese Aufgabe wird gelöst durch einen Sensor mit den Merkmalen des Anspruchs 1.

Ein erfindungsgemäßer Sensor zum optischen Erfassen eines Objekts in einem Erfassungsbereich weist einen Lichtempfänger zum Erfassen eines vom Vorhandensein des Objektes abhängigen Empfangssignals auf, eine Auswerteeinheit zum Auswerten des Empfangssignals und Ausgeben eines binären Objekterfassungssignals, einen sensorinternen Zeitgeber zum Ermitteln eines Objekterfassungszeitpunkts und einen Synchronisationseingang zum Aufnehmen eines Synchronisationssignals zum Synchronisieren des Zeitgebers mit einer externen Systemzeit und einen Ausgang zum Ausgeben des binären Objekterfassungssignals und des zugehörigen Objekterfassungszeitpunkts. Erfindungsgemäß weist die Auswerteeinheit einen Speicher auf zum Speichern von Empfangssignalpegeln zu vom Zeitgeber vorgegebenen Zeitpunkten und eine Zeitpunktbestimmungseinheit, um aus den gespeicherten Werten und den vorgegebenen Zeitpunkten nachträglich den Objekterfassungszeitpunkt zu ermitteln, nachdem das Empfangssignal einen oberen Schwellwert überschritten hat.

Der erfindungsgemäße Sensor weist den wesentlichen Vorteil auf, dass die Zeitpunktbestimmung sehr viel genauer wird, denn der Zeitpunkt wird aus den gespeicherten Empfangswerten und damit aus einem Signalverlauf ermittelt. Das ergibt deswegen einen erheblich genaueren Zeitpunkt weil der Lichtempfangssignalverlauf sehr stark von den optischen Eigenschaften des Objektes abhängt und diese optischen Eigenschaften, also im Wesentlichen die Reflexionseigenschaften, von Objekt zu Objekt, je nach Material sehr unterschiedlich sind. Bei stark reflektierenden weißen Objekten wird nach dem Stand der Technik (EP 2 085 841 B1) eine obere Signalschwelle bei gleicher Förderung der Objekte an dem Sensor vorbei, viel früher erreicht als bei einem matten, schwarzen Objekt.

Die Erfindung schaut aber auf den gespeicherten Signalverlauf zurück und ermöglicht eine nachträgliche Bestimmung des Objekterfassungszeitpunkts. Es wird also festgestellt, wann das Objekt in den Lichtstrahl des Sensors eingetreten ist. Für das oben angegebene Beispiel mit einerseits einem weißen, reflektierenden Objekt und andererseits mit einem matten, schwarzen Objekt, sind die jeweiligen Zeitpunkte eigentlich gleich bzw. haben einen geringen Jitter. Dies kann mit dem erfindungsgemäßen Sensor auch so erfasst werden.

Die Zeitpunktbestimmung wird erheblich genauer.

Da der Sensor die Objektposition genauer bestimmt, wird der Positionsfehler bei der Bearbeitung durch den Aktor kleiner. Die notwendige bzw. gewünschte Genauigkeit beim Bearbeitungsstart ergibt letztendlich die Geschwindigkeit beim Durchlauf. Es wird somit durch die Erfindung eine höhere Geschwindigkeit der Bearbeitungsmaschine bei gleicher Genauigkeit ermöglicht (oder höhere Genauigkeit bei gleicher Geschwindigkeit).

Ein weiterer Vorteil besteht darin, dass der Unterschied in der Zeitpunktbestimmung von Objekt zu Objekt in der beschriebenen Weise immer kleiner ist als beim Stand der Technik. Somit kann die Lücke zwischen den zu bearbeitenden Objekten kleiner werden, da der durch den Jitter bedingte Sicherheitsaufschlag auf die Lücke kleiner wird, was letztlich mehr Durchsatz bei gleicher Geschwindigkeit bedeutet.

Bevorzugt liegen die Zeitpunkte, zu denen jeweils eine Erfassung und Speicherung des Empfangssignalpegels erfolgt in einem vom Zeitgeber vorgegebenen Zeitraster.

Eine recht einfache Bestimmung des Objekterfassungszeitpunkts kann erfolgen, wenn die Zeitpunktbestimmungseinheit so ausgebildet ist, dass als Objekterfassungszeitpunkt derjenige Zeitpunkt bestimmt wird, zu dem ein unterer Schwellwert zuletzt überschritten wurde. Dann muss im Speicher lediglich zurückgegangen werden mit einem einfachen Schwellwertvergleich. Es müssen keine aufwändigen Berechnungen erfolgen.

Noch einfacher wird die Bestimmung, wenn der Speicher immer gelöscht wird, wenn das Empfangssignal kleiner als der untere Schwellwert ist. Dann ist nämlich der gesuchte Objekterfassungszeitpunkt einfach der älteste gespeicherte Wert.

Vorteilhafterweise kann der Speicher als Fi-Fo-Speicher (first in - first out) ausgebildet sein.

Bevorzugt findet ein Datenaustausch zwischen Sensor und Steuerung zu einem Synchronisationszeitpunkt statt, an dem nicht nur der sensorinterne Zeitgeber mit der Systemzeit synchronisiert wird, sondern sämtliche notwendigen Informationen, wie das Objekterfassungssignal, der Objekterfassungszeitpunkt und das Synchronisationssignal, in einem kurzen Datenaustausch übertragen werden.

Vorteilhafterweise ist dazu eine Kommunikationsschnittstelle vorgesehen zur Verbindung des Sensors mit der Steuereinheit, vorzugsweise über ein Bussystem.

Weiter wird die oben genannte Aufgabe auch gelöst durch eine Verwendung eines solchen Sensors in einer Bearbeitungseinrichtung, die eine Steuereinheit mit Zeitgeber zum Ausgeben der Systemzeit und des Synchronisationssignals, sowie mindestens einem mit der Steuereinheit verbundenen Aktor zum Empfangen der Systemzeit und eines Steuersignals umfasst.

Ebenfalls wird die Aufgabe durch ein Verfahren zum optischen Erfassen eines Objektes und Bestimmen eines Objekterfassungszeitpunkts mit einem Sensor mit folgenden Schritten gelöst:
- Erfassen eines vom Vorhandensein eines Objektes abhängigen Empfangssignals mit einem Empfänger,
- Bereitstellen eines sensorinternen Zeittaktes durch einen Zeitgeber,
- Synchronisieren des Zeitgebers mit einer externen Systemzeit,
- Erfassen von Empfangssignalpegeln,
- Speichern von Empfangssignalpegeln zu vom Zeitgeber vorgegebenen Zeitpunkten,
- Erfassen eines Überschreitens des Empfangssignals über einen oberen Schwellwert,
- Bestimmen eines Objekterfassungszeitpunkts aus den gespeicherten Werten und den vorgegebenen Zeitpunkten,
- Ausgeben eines binären Objekterfassungssignals und des zugehörigen Objekterfassungszeitpunkts.

Die Vorteile des Verfahrens sind dieselben wie die oben zu dem Sensor genannten.

Aufgrund des Objekterfassungssignals und des Objekterfassungszeitpunkts kann der Bearbeitungszeitpunkt für den Aktor vorab berechnet werden und ein Bearbeitungssignal an den Aktor zu einer beliebigen Zeit vor dem Bearbeitungsschritt übergeben werden. Die Steuereinheit muss somit kein exaktes Trigger-Signal an den Aktor zu einem bestimmten Bearbeitungszeitpunkt ausgeben, sondern es genügt, vor der Bearbeitung den Bearbeitungszeitpunkt zu berechnen und diesen dem Aktor vorher mitzuteilen, so dass der Aktor zur vorgegebenen Zeit selbst den Betrieb aufnimmt. Hierdurch wird eine zeitgenauere Ansteuerung des Aktorelements ermöglicht. Damit lässt sich die Durchlaufzeit eines mit der Bearbeitungseinrichtung zu bearbeitenden Werkstücks weiter erheblich reduzieren.

Sinnvollerweise umfasst die Bearbeitungseinrichtung weitere erfindungsgemäße Sensoren und weitere Aktoren. Da die Aktoren nur über die jeweilige Bearbeitungszeit informiert und nicht beim Bearbeitungszeitpunkt von der Steuereinheit getriggert werden müssen, kann der Bearbeitungszeitpunkt zu einem willkürlichen Zeitpunkt vor der Bearbeitung gesendet werden, so dass keine Engpässe auf einer Kommunikationsleitung oder Feldbus entstehen, und trotzdem eine exaktere Ansteuerung aufgrund der gleichen Zeitbasis in den beteiligten Komponenten gewährleistet wird.

In Weiterbildung der Erfindung kann ein weiterer Speicher vorgesehen sein, zum Speichern von ein oder mehreren Objekterfassungssignalen und zugehörigen Objekterfassungszeitpunkten. Damit ist es prinzipiell möglich, dass der Sensor seine Informationen auch zu einer späteren Zeit abgeben kann. Somit muss ein erfasstes Ereignis und/oder eine Ereigniszeit nicht sofort an eine Steuereinheit weitergegeben, sondern kann in dem Sensor zwischengespeichert werden, so dass auch zwei oder mehr Ereignisse und/oder Ereigniszeiten zusammen an eine Steuereinheit gesendet werden können.

Im Folgenden wird die Erfindung anhand eines Ausführungsbeispiels näher erläutert. In der Zeichnung zeigen:
- Fig. 1: eine schematische Darstellung einer Bearbeitungseinrichtung mit einem erfindungsgemäßen Sensor;
- Fig. 2: Diagramme verschiedener Signale über die Zeit.

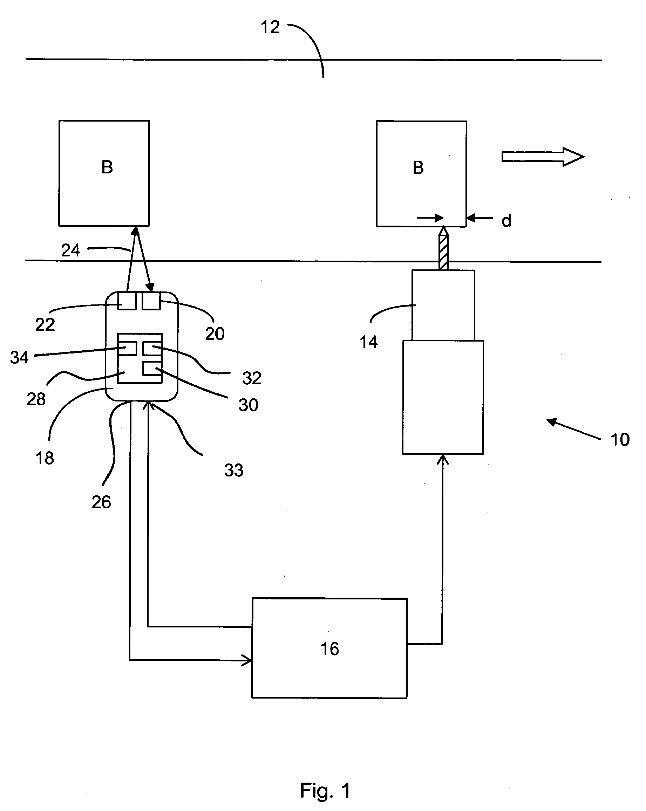

Eine in Fig. 1 schematisch dargestellte Bearbeitungseinrichtung 10 weist eine Fördereinrichtung 12, beispielsweise ein Förderband oder sonstige Transporteinrichtung, auf, mit dem Objekte B durch die Bearbeitungseinrichtung 10 transportiert werden, um die Objekte B an verschiedenen Bearbeitungsstationen zu bearbeiten. Eine beispielhafte Bearbeitungsstation ist auf der rechten Seite der Fig. 1 sehr schematisch dargestellt und weist einen Aktor 14 auf, der beispielsweise als Bohrer oder Stanze oder Ähnlichem ausgebildet sein kann, der entsprechende Löcher in das Objekt B bohrt oder stanzt.

Der Aktor 14 wird von einer Steuerung 16 angesteuert bzw. erhält von dieser Steuerinformationen, damit der Aktor 14 die Bearbeitung zu einem korrekten Bearbeitungszeitpunkt durchführen kann, damit letztendlich das Objekt B an der richtigen Stelle bearbeitet wird.

Damit die Steuerung Informationen hat, wo sich das Objekt B in der Bearbeitungseinrichtung 10 befindet, ist stromaufwärts des Aktors 14 an der Fördereinrichtung 12 ein erfindungsgemäßer, binärer Sensor 18 angeordnet, dessen Funktion es ist, das Vorhandensein des Objekts B zu erkennen und dementsprechend ein Objekterfassungssignal auszugeben und zusätzlich einen Objekterfassungszeitpunkt festzuhalten und auch den Objekterfassungszeitpunkt auszugeben.

Dazu weist der Sensor 18 zumindest einen Lichtempfänger 20 auf, der in Abhängigkeit vom Vorhandensein des Objekts B in einem Erfassungsbereich ein Empfangssignal E erzeugt. Der Sensor 18 ist als optischer Sensor ausgebildet, wobei der Empfänger 20 dann als Photoempfänger, beispielsweise Photodiode, ausgebildet ist und der Sensor 18 weist einen Lichtsender 22 auf, der einen Lichtstrahl 24 in den Erfassungsbereich sendet, der gegebenenfalls vom Objekt B remittiert wird.

An einem Ausgang 26 wird das binäre Objekterfassungssignal und der zugehörige Objekterfassungszeitpunkt ausgegeben.

Zur Erzeugung und zum Ausgeben des Objekterfassungssignals und Ermittlung des Objekterfassungszeitpunkts weist der Sensor 18 eine Auswerteeinheit 28 und einen sensorinternen Zeitgeber 30 auf.

Der Sensor 18 ist mit der Steuerung 16 bidirektional verbunden. Zum einen erhält der Sensor 18 von der Steuerung 16 über einen Synchronisationseingang 33 ein Synchronisationssignal zum Synchronisieren des sensorinternen Zeitgebers 30 mit einer externen Systemzeit, und zum anderen gibt der Sensor 18 über den Ausgang 26 das Objekterfassungssignal und den Objekterfassungszeitpunkt an die Steuerung 16.

Die Steuerung 16 kann mit diesen Informationen und mit Kenntnis der Fördergeschwindigkeit, die über einen nicht dargestellten Encoder erfassbar sein kann, berechnen, zu welchem Zeitpunkt das Objekt B sich in der richtigen Position an der Bearbeitungsstation im Wirkbereich des Aktors 14 befindet. Mit diesen Informationen erfolgt die Ansteuerung des Aktors 14 durch die Steuerung 16.

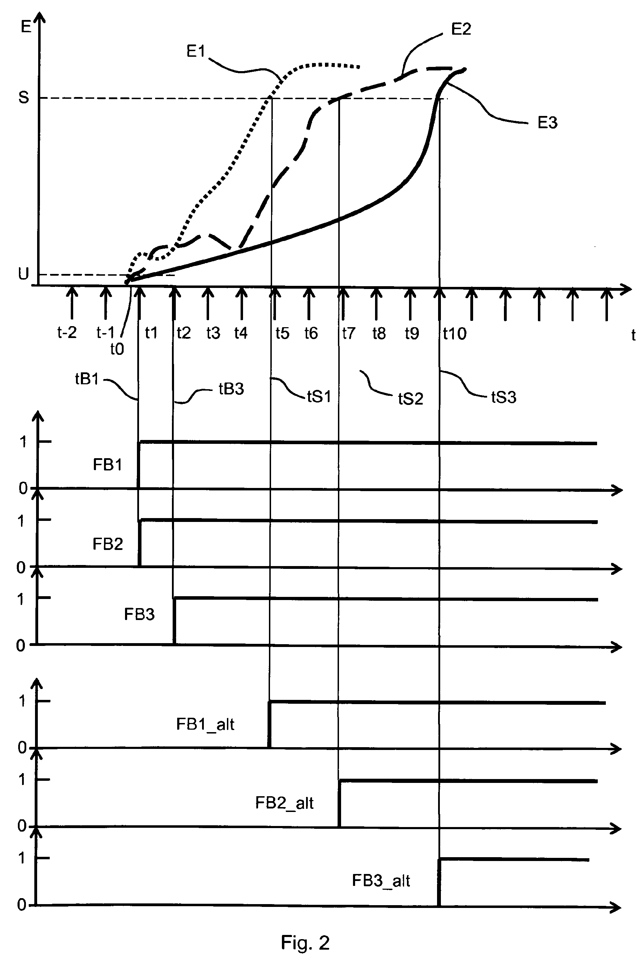

Der Kern dieser Erfindung besteht nun in der Ermittlung des Objekterfassungszeitpunkts bzw. die dazu notwendige Ausgestaltung des Sensors 18, wie im Folgenden ausgeführt und insbesondere anhand der zeitlichen Diagramme der Fig. 2 erläutert.

Die Auswerteeinheit 28 weist einen Speicher 32 auf, mit dem über einen bestimmten Zeitraum fortwährend die Empfangssignalpegel E des Empfängers 20 zu vom Zeitgeber 30 vorgegebenen Zeitpunkten tn, die bevorzugt in einem gleichmäßigen Zeitraster liegen, gespeichert werden können. Der Speicher 32 kann dazu vorteilhafterweise als FiFo-Speicher ausgebildet sein. Das Empfangssignal E kann damit entsprechend der Tiefe des FiFo-Speichers 32 für ein bestimmtes zurückliegendes Zeitintervall, zumindest an den Stellen tn, gespeichert werden.

Drei typische Empfangssignalverläufe E1 (punktiert dargestellt), E2 (gestrichelt) und E3 (durchgezogene fette Linie) sind in der oberen Darstellung der Fig. 2 qualitativ dargestellt. Je nach den Oberflächeneigenschaften des Objektes B (Farbe, Reflexionsgrad, Rauheit, Kantenform, abgesplitterte Kanten, etc.) unterscheiden sich die Empfangssignalverläufe. Selbst bei Objekten mit gleicher Oberfläche sind die Verläufe unterschiedlich, da z. B. jedes Objekt andere Schnittkanten oder dergleichen Unterschiede hat. Da aber jedes Objekt einen Anfang hat, starten alle Verläufe an einem im Wesentlichen identischen Zeitpunkt t0.

Da nicht jedes Signal ungleich Null der Detektion eines Objekts entspricht, ist ein oberer Schwellwert S für den Empfangssignalpegel E definiert, der nur überschritten wird, wenn sich auch wirklich ein Objekt B tatsächlich im Erfassungsbereich des Sensors 18 befindet. Nur dann gibt es also genügend remittiertes Licht um sicher sagen zu können, dass ein Objekt im Erfassungsbereich des Sensors 18 vorhanden ist. Das bedeutet andererseits, dass es auch Signale geben kann, die zwischen 0 und S liegen, aber nicht einem Objekt entsprechen. Solche Signale können beispielsweise durch Störungen, wie zufällige Objekte (umherfliegende Späne) oder zufällige Reflexionen, hervorgerufen werden und dürfen nicht zu einem Objektfeststellungssignal führen. Weiter gibt es immer ein Rauschen, das gar keinem Objektsignal entspricht. Um dieses Rauschen zu eliminieren, ist ein unterer Schwellwert U definiert, unterhalb dessen ein Signal als Rauschen definiert ist.

Erst nach Überschreiten des oberen Schwellwertes S, also nach dem Zeitpunkt tS1 (bzw.tS2, tS3), ist festgestellt, dass ein Objekt B vorliegt. Dann ist aber der Zeitpunkt t0, der den Anfang des Objekts B angibt, bereits vorbei. Die Zeitpunkte tS1, tS2 und tS3 entsprechen den Zeitpunkten, die nach dem Stand der Technik (EP 2 085 841 B1) feststellbar waren.

Nun weist nach Erfindung der Sensor 18 aber weiter eine Zeitpunktbestimmungseinheit 34 auf, mit der aus den gespeicherten Werten des Empfangssignalpegels E und den vorgegebene Zeitpunkten tn, also im Wesentlichen aus den Empfangssignalverläufen E1, E2 bzw. E3, möglichst genau der Zeitpunkt, zu dem das Objekt den Erfassungsbereich des Sensors 18 passiert hat, nachträglich ermittelbar ist. Dieser Zeitpunkt ist dann der Objekterfassungszeitpunkt. Hierbei ist es wichtig zu betonen und ein wesentlicher Teil der Erfindung, dass der tatsächliche Objekterfassungszeitpunkt, der dem tatsächlichen Objektanfang entspricht, nachträglich, also im Nachhinein, wenn er tatsächlich schon vorbei ist, bestimmt wird.

Diese nachträgliche Bestimmung eines Zeitpunktes, der möglichst nahe an t0 liegt, kann nun wie folgt geschehen.

Das Empfangssignal wird fortlaufend wie oben beschrieben gespeichert. Die Speicherung erfolgt aber nur an den Zeitrasterpunkten tn, so dass eigentlich nicht der komplette Empfangssignalverlauf E1, E2, E3 stetig gespeichert ist, sondern nur punktuell an den Zeitrasterpunkten tn.

Im einfachsten Fall kann eine Bestimmung des Objekterfassungszeitpunkts nun so erfolgen, dass wenn erkannt wird, dass der obere Schwellwert S überschritten wurde (am Beispiel E1 wäre das zum Zeitpunkt t5), dann wird schlicht und einfach in den gespeicherten Werten so weit zurückgegangen, bis der untere Schwellwert U erreicht ist, und der entsprechende Zeitpunkt wird als Objekterfassungszeitpunkt bestimmt. Am Beispiel von E1 liegt zu den Zeitpunkten t4, t3, t2 und t1 das Signal E1 immer (noch) oberhalb von U. Erst bei t-1 liegt E1 unterhalb von U. Damit muss t0 zwischen t-1 und t1 liegen und als Objekterfassungszeitpunkt tB1 wird der Rasterzeitpunkt t1 bestimmt.

Beim Beispiel des Empfangssignalverlaufs E2 liegt der Objekterfassungszeitpunkt tB2 ebenfalls bei t1, denn bei t6 bis t1 ist E2 größer als U und wiederum erst bei t-1 ist E3 kleiner als U. Beim Beispiel des Empfangssignalverlaufs E3 liegt der Objekterfassungszeitpunkt tB3 bei t2, denn bei t9 bis t2 ist E3 größer als U und erst bei t1 ist E3 kleiner als U.

In dieser Art der Bestimmung des Objekterfassungszeitpunkts tB1, tB2, tB3 werden die gespeicherten Empfangssignalpegel also daraufhin untersucht, wann der untere Schwellwert U zuletzt überschritten wurde.

In einer weiteren Ausführungsform kann dieses schon einfache Bestimmungsverfahren weiter vereinfacht werden. In dieser Ausführungsform wird der Speicher 32 immer vollständig gelöscht, wenn das Empfangssignal E kleiner als der untere Schwellwert U ist. Wenn dann erkannt wird, dass der obere Schwellwert S überschritten ist, wird einfach der älteste gespeicherte Zeitpunkt tn als Objekterfassungszeitpunkt tB1, tB2 bzw. tB3 bestimmt.

In den unteren sechs Darstellungen von Fig. 2 ist jeweils das binäre Objektfeststellungssignal mit seiner Zeitinformation dargestellt, wie es vom Sensor 18 an die Steuerung 16 übermittelt wird. Die drei oberen der sechs Signale, nämlich FB1, FB2 und FB3, sind gemäß der Erfindung ermittelt. Die beiden unteren Signale FB1_alt, FB2_alt und FB3_alt sind Darstellungen einer Ermittlung nach dem Stand der Technik (EP 2 085 841 B1).

Aus diesen Darstellungen ergeben sich direkt die Vorteile der Erfindung. Da die verschiedenen Empfangssignalverläufe für die verschiedenen Objekte in der Zeit immer "auseinanderlaufen", ist die erfindungsgemäße Zeitpunktbestimmung aus der Vergangenheit sehr viel genauer, denn sie kommt dem eigentliche Objektanfang bei t0 sehr viel näher und ist damit unabhängiger von Objekteigenschaften. Die verschiedenen individuellen Signalverläufe führen über die Zurückverfolgung zum gleichen Anfang.

Oder anders ausgedrückt ist der Unterschied in der Zeitpunktbestimmung von Objekt zu Objekt, also von tB1, tB2 bzw. tB3, aufgrund von z. B. unterschiedlicher Oberflächen immer kleiner als beim Stand der Technik, also immer kleiner als der Unterschied von tS1, tS2 und tS3. Somit kann die Lücke zwischen den zu bearbeitenden Objekten kleiner werden, da der durch den Jitter bedingte Sicherheitsaufschlag auf die Lücke kleiner wird, was letztlich mehr Durchsatz bei gleicher Geschwindigkeit bedeutet.

Zum anderen kann dadurch auf den frühestmöglichen Zeitpunkt zurückgeschlossen werden und letztendlich der Steuerung und damit dem Aktor ein sehr viel früheres und genaueres Zeitsignal übermittelt werden als das bisher möglich war. Zum einen wird die Zeitpunktbestimmung von tB1, tB2 bzw. tB3 sehr viel genauer, denn der Zeitpunkt wird aus den gespeicherten Empfangswerten und damit aus einem Signalverlauf ermittelt. Zum anderen kann durch die Beobachtung des Signalverlaufs und die damit mögliche nachträgliche Zeitpunktermittlung auf den frühestmöglichen Zeitpunkt zurückgeschlossen werden (tB1 anstatt tS1, tB2 anstatt tS2 und tB3 anstatt tS3) und letztendlich der Steuerung und damit dem Aktor ein sehr viel genaueres Zeitsignal übermittelt werden als das bisher möglich war, wobei das Zeitsignal am frühestmöglichen Zeitpunkt liegt. Da der Sensor die Objektposition genauer bestimmt, wird der Positionsfehler bei der Bearbeitung durch den Aktor kleiner. Die notwendige bzw. gewünschte Genauigkeit beim Bearbeitungsstart ergibt letztendlich die Geschwindigkeit beim Durchlauf. Es wird somit durch die Erfindung eine höhere Geschwindigkeit der Bearbeitungsmaschine bei gleicher Genauigkeit ermöglicht (oder höhere Genauigkeit bei gleicher Geschwindigkeit).

Alle Informationen, nämlich das Objekterfassungssignal FB1, FB2 bzw. FB3 und der Objekterfassungszeitpunkt tB1, tB2 bzw. tB3 werden zusammen als Erfassungssignal, bevorzugt zu einem Synchronisationszeitpunkt, zu dem sowieso eine Kommunikation mit der Steuerung besteht, an die Steuerung ausgegeben.

Die Kommunikation kann wie in Fig. 1 dargestellt, separat über eine Kommunikationsschnittstelle erfolgen oder vorzugsweise über ein Kommunikationssystem, wie zum Beispiel ein Bussystem.

## Patentansprüche

1. Sensor zum optischen Erfassen eines Objekts (B) in einem Erfassungsbereich,
- mit einem Lichtempfänger (20) zum Erfassen eines vom Vorhandensein des Objektes (B) abhängigen Empfangssignals (E1; E2; E3),
- mit einer Auswerteeinheit (28) zum Auswerten des Empfangssignals (E1; E2; E3) und Ausgeben eines binären Objekterfassungssignals (FB1; FB2; FB3),
- mit einem sensorinternen Zeitgeber (30) zum Ermitteln eines Objekterfassungszeitpunkts (tB1; tB2; tB3) und
- mit einem Synchronisationseingang (33) zum Aufnehmen eines Synchronisationssignals zum Synchronisieren des Zeitgebers (30) mit einer externen Systemzeit und
- mit einem Ausgang (26) zum Ausgeben des binären Objekterfassungssignals (FB1; FB2; FB3) und des zugehörigen Objekterfassungszeitpunkts (tB1; tB2; tB3),
- wobei die Auswerteeinheit (28) einen Speicher (32) aufweist
**dadurch gekennzeichnet, dass**
die Auswerteeinheit (28) ausgebildet ist, an vom Zeitgeber (30) vorgegebenen Zeitpunkten (tn) Empfangssignalpegel (E), die Werte zwischen Null und mindestens einer oberen Schwelle (S) annehmen können, in dem Speicher (32) zu speichern und die Auswerteeinheit (28) eine Zeitpunktbestimmungseinheit (34) aufweist, die ausgebildet ist aus den gespeicherten Werten (E) und den vorgegebenen Zeitpunkten (tn) den Objekterfassungszeitpunkt (tB1; tB2; tB3) nachträglich zu ermitteln, nachdem das Empfangssignal (E1; E2; E3) einen oberen Schwellwert (S) überschritten hat, durch Zurückgehen in den gespeicherten Empfangssignalpegeln (E) bis ein unterer Schwellwert (U) erreicht ist und der entsprechende Zeitpunkt als Objekterfassungszeitpunkt (tB1; tB2; tB3) bestimmt wird,.

2. Sensor nach Anspruch 1, **dadurch gekennzeichnet, dass** die Zeitpunkte (tn) in einem vom Zeitgeber (30) vorgegebenen Zeitraster liegen und die Zeitpunktbestimmungseinheit (34) so ausgebildet ist, dass als Objekterfassungszeitpunkt (tB1; tB2; tB3) derjenige Zeitpunkt bestimmt wird, zu dem ein unterer Schwellwert (U) zuletzt überschritten wurde.

3. Sensor nach Anspruch 2, **dadurch gekennzeichnet, dass** der Speicher immer gelöscht wird, wenn das Empfangssignal kleiner als der untere Schwellwert ist.

4. Sensor nach einem der vorhergehenden Ansprüche, **dadurch gekennzeichnet, dass** der Speicher als Fi-Fo-Speicher ausgebildet ist.

5. Sensor einem der vorhergehenden Ansprüche, **dadurch gekennzeichnet, dass** das Objekterfassungssignal und der Objekterfassungszeitpunkt zusammen als Erfassungssignal, bevorzugt zu einem Synchronisationszeitpunkt, ausgegeben werden.

6. Sensor nach einem der vorhergehenden Ansprüche, **gekennzeichnet durch** eine Kommunikationsschnittstelle zur Verbindung mit einer externen Steuereinheit, vorzugsweise über ein Kommunikationssystem, wie zum Beispiel ein Bussystem.

7. Bearbeitungseinrichtung, die eine Steuereinheit mit Zeitgeber zum Ausgeben der Systemzeit und des Synchronisationssignals, sowie mindestens eine mit der Steuereinheit verbundene Maschineneinheit zum Empfangen der Systemzeit und eines Steuersignals umfasst, wobei die Bearbeitungseinrichtung einen Sensor nach einem der vorhergehenden Ansprüche aufweist.

8. Verfahren zum optischen Erfassen eines Objektes (B) und Bestimmen eines Objekterfassungszeitpunkts mit einem Sensor (18) mit den Schritten:
- Erfassen eines vom Vorhandensein eines Objektes (B) abhängigen Empfangssignals mit einem Lichtempfänger (20),
- Bereitstellen eines sensorinternen Zeittaktes durch einen Zeitgeber (30),
- Synchronisieren des Zeitgebers (30) mit einer externen Systemzeit,
- Erfassen von Empfangssignalpegeln (E), die Werte zwischen Null und mindestens einer oberen Schwelle (S) annehmen können,
- Speichern der Empfangssignalpegel (E) zu vom Zeitgeber (30) vorgegebenen Zeitpunkten (tn),
- Erfassen eines Überschreitens des Empfangssignals (E1; E2; E3) über den oberen Schwellwert (S),
- nach der Erfassung eines Überschreiten des Empfangssignals (E1; E2; E3) Bestimmen eines Objekterfassungszeitpunkts aus den gespeicherten Werten und den vorgegebenen Zeitpunkten, durch Zurückgehen in den gespeicherten Empfangssignalpegeln (E) bis ein unterer Schwellwert (U) erreicht ist und der entsprechende Zeitpunkt als Objekterfassungszeitpunkt bestimmt wird,
- Ausgeben eines binären Objekterfassungssignals und des zugehörigen Objekterfassungszeitpunkts.

9. Verfahren nach Anspruch 8, **dadurch gekennzeichnet, dass** der Speicher immer gelöscht wird, wenn das Empfangssignal kleiner als der untere Schwellwert ist und der älteste gespeicherte Zeitpunkt als Objekterfassungszeitpunkt (tB1; tB2; tB3) bestimmt wird.

## Claims

1. A sensor for the optical detection of an object (B) in a detection zone,
- having a light receiver (20) for detecting a received signal (E1; E2; E3) dependent on the presence of the object (B);
- having an evaluation unit (28) for evaluating the received signal (E1; E2; E3) and for outputting a binary object detection signal (FB1; FB2; FB3);
- having a timer (30) internal to the sensor for determining an object detection time (tB1; tB2; tB3); and
- having a synchronization input (33) for recording a synchronization signal for synchronizing the timer (30) with an external system time; and
- having an output (26) for outputting the binary object detection signal (FB1; FB2; FB3) and the associated objection detection time (tB1; tB2; tB3),
wherein the evaluation unit (28) has a memory (32),
**characterized in that**
the evaluation unit (28) is configured to store received signal levels (E), which can adopt values between zero and at least one upper threshold (S) in the memory (32) at times (tn) predefined by the timer (30); and **in that** the evaluation unit (28) has a time determination unit (34) which is configured subsequently to determine the object detection time (tB1; tB2; tB3) from the stored values (E) and from the predefined times (tn) after the received signal (E1; E2; E3) has exceeded an upper threshold value (S) by moving back in the stored received signal levels (E) until a lower threshold value (U) is reached and the corresponding time is determined as the object detection time (tB1; tB2; tB3).

2. A sensor in accordance with claim 1, **characterized in that** the times (tn) lie in a time period predefined by the timer (30); and **in that** the time determination unit (34) is configured such that that time is determined as the object detection time (tB1; tB2; tB3) at which a lower threshold value (U) was last exceeded.

3. A sensor in accordance with claim 2, **characterized in that** the memory is always deleted when the received signal is smaller than the lower threshold value.

4. A sensor in accordance with any one of the preceding claims, **characterized in that** the memory is configured as a FIFO memory.

5. A sensor in accordance with any one of the preceding claims, **characterized in that** the object detection signal and the object detection time are output together as a detected signal, preferably at a synchronization time.

6. A sensor in accordance with any one of the preceding claims, **characterized by** a communication interface for communication with an external control unit, preferably via a communication system such as a bus system.

7. A processing device which comprises a control unit having a timer for outputting the system time and the synchronization signal, as well as at least one machine unit connected to the control unit for receiving the system time and a control signal, wherein the processing device has a sensor in accordance with any one of the preceding claims.

8. A method for the optical detection of an object (B) and for the determination of an object detection time using a sensor (18), the method comprising the steps:
- detecting a received signal dependent on the presence of an object (B) using a light receiver (20);
- providing a clock internal to the sensor by a timer (30),
- synchronizing the timer (30) with an external system time;
- detecting received signal levels (E) which can adopt values between zero and at least one upper threshold (S);
- storing the received signal levels (E) at times (tn) predefined by the timer (30);
- detecting an exceeding of the received signal (E1; E2; E3) via an upper threshold (S);
- determining, after the detection of an exceeding of the received signal (E1; E2; E3), an object detection time from the stored values and from the predefined times by moving back in the stored received signal levels (E) until a lower threshold value (U) is reached and the corresponding time is determined as the object detection time; and
- outputting a binary object detection signal and the associated object detection time.

9. A method in accordance with claim 8, **characterized in that** the memory is always deleted when the received signal is smaller than the lower threshold value and the oldest stored time is determined as the object detection time (tB1; tB2; tB3).

## Revendications

1. Capteur pour la détection optique d'un objet (B) dans une zone de détection,
- comprenant un récepteur de lumière (20) pour détecter un signal de réception (E1 ; E2 ; E3) qui dépend de la présence de l'objet (B),
- comprenant une unité d'évaluation (28) pour évaluer le signal de réception (E1 ; E2 ; E3) et délivrer un signal de détection d'objet binaire (FB1 ; FB2 ; FB3),
- comprenant une horloge interne au capteur (30) pour déterminer un instant de détection d'objet (tB1 ; tB2 ; tB3) et
- comprenant une entrée de synchronisation (33) pour enregistrer un signal de synchronisation afin de synchroniser l'horloge (30) avec un temps de système externe, et
- comprenant une sortie (26) pour délivrer le signal de détection d'objet binaire (FB1 ; FB2 ; FB3) et l'instant de détection d'objet (tB1 ; tB2 ; tB3) associé,
- dans lequel l'unité d'évaluation (28) comprend une mémoire (32),
**caractérisé en ce que**
l'unité d'évaluation (28) est réalisée pour mémoriser dans la mémoire (32), à des instants (tn) prédéterminés par l'horloge (30), les niveaux (E) du signal de réception qui peuvent prendre des valeurs entre zéro et au moins un seuil supérieur (S), et l'unité d'évaluation (28) comprend une unité de détermination d'instant (34), qui est réalisée pour déterminer à posteriori l'instant de détection d'objet (tB1 ; tB2 ; tB3), à partir des valeurs mémorisées (E) et des instants prédéterminés (tn), après que le signal de réception (E1 ; E2 ; E3) a dépassé une valeur seuil supérieure (S), en retournant dans les niveaux mémorisés (E) du signal de réception jusqu'à atteindre une valeur seuil inférieure (E), et l'instant correspondant est déterminé comme étant l'instant de détection d'objet (tB1 ; tB2 ; tB3).

2. Capteur selon la revendication 1, **caractérisé en ce que** les instants (tn) tombent dans une trame temporelle prédéterminée par l'horloge (30), et l'unité de détermination d'un instant (34) est ainsi réalisée qu'elle détermine à titre d'instant de détection d'objet (tB1 ; tB2 ; tB3) l'instant auquel une valeur seuil inférieure (E) a été dépassée en dernier lieu.

3. Capteur selon la revendication 2, **caractérisé en ce que** la mémoire est toujours effacée quand le signal de réception est plus petit que la valeur seuil inférieure.

4. Capteur selon l'une des revendications précédentes, **caractérisé en ce que** la mémoire est réalisée sous forme de mémoire "Fi-Fo" (premier entré/premier sorti).

5. Capteur selon l'une des revendications précédentes, **caractérisé en ce que** le signal de détection d'objet et l'instant de détection d'objet sont délivrés conjointement sous forme de signal de détection, de préférence à un instant de synchronisation.

6. Capteur selon l'une des revendications précédentes, **caractérisé par** une interface de communication pour la liaison avec une unité de commande externe, de préférence via un système de communication comme par exemple un système à bus.

7. Dispositif de traitement, qui inclut une unité de commande avec une horloge pour délivrer le temps de système et le signal de synchronisation, ainsi qu'au moins une unité de machine reliée à l'unité de commande pour la réception du temps de système et d'un signal de commande, dans lequel le dispositif de traitement comprend un capteur selon l'une des revendications précédentes.

8. Procédé pour la détection optique d'un objet (B) et pour la détermination d'un instant de détection d'objet avec un capteur (18), comprenant les étapes suivantes :
- on détecte un signal de réception dépendant de la présence d'un objet (B), avec un récepteur de lumière (20),
- on met à disposition une cadence interne au capteur au moyen d'une horloge (30),
- on synchronise l'horloge (30) avec un temps de système externe,
- on détecte des niveaux des signaux de réception (E) qui peuvent prendre des valeurs entre zéro et au moins un seuil supérieur (S),
- on mémorise le niveau de réception (E) à des instants (tn) prédéterminés par l'horloge (30),
- on détecte un dépassement du signal de réception (E1 ; E2 ; E3) au-dessus de la valeur seuil supérieure (S),
- après la détection d'un dépassement du signal de réception (E1 ; E2 ; E3), on détermine un instant de détection d'objet à partir des valeurs mémorisées et des instants prédéterminés, en retournant dans les niveaux de signal de réception (E) mémorisés jusqu'à atteindre une valeur seuil inférieure (E), et l'instant correspondant est déterminé comme étant l'instant de détection d'objet,
- on délivre un signal de détection d'objet binaire et l'instant de détection d'objet associé.

9. Procédé selon la revendication 8, **caractérisé en ce que** la mémoire est toujours effacée quand le signal de réception est plus petit que la valeur seuil inférieure, et l'instant mémorisé le plus ancien est déterminé comme étant l'instant de détection d'objet (tB1 ; tB2 ; tB3).
